# EUROPÄISCHE PATENTSCHRIFT

(11) **EP 3 643 591 B1**
(45) Veröffentlichungstag und Bekanntmachung des Hinweises auf die Patenterteilung: **10.11.2021**
(21) Anmeldenummer: 19188761.1
(22) Anmeldetag: 29.07.2019
(51) Int. Cl.: B62J 33/00, B62J 1/28, B62J 1/02, B62J 1/18, B62J 43/20, B62J 43/30, B62J 45/41

(54) **FAHRRADSATTEL MIT EINER ELEKTRISCHEN HEIZEINRICHTUNG**
BICYCLE SADDLE WITH AN ELECTRIC HEATING DEVICE
SELLE DE BICYCLETTE DOTÉE D'UN DISPOSITIF DE CHAUFFAGE ÉLECTRIQUE

(30) Priorität: 24.10.2018 DE 202018004939 U
(43) Veröffentlichungstag der Anmeldung: 29.04.2020
(73) Patentinhaber: Büchel GmbH & Co. Fahrzeugteilefabrik KG, 98544 Zella-Mehlis (DE)
(72) Erfinder: Büchel, Erhard, 36043 Fulda (DE); Greifenegg, Hans M., 39052 Kaltern (IT)
(74) Vertreter: Sawodny, Michael-Wolfgang

(56) Entgegenhaltungen:
- EP-A1- 3 025 943
- CN-U- 202 641 925
- CN-U- 203 473 097
- CN-U- 205 168 708
- CN-U- 205 769 754
- CN-U- 206 231 486

## Beschreibung

Die Erfindung betrifft einen Fahrradsattel mit einer elektrischen Heizeinrichtung und einer Einrichtung zur Stromversorgung der elektrischen Heizeinrichtung.

Fahrradsattel mit Heizungen bzw. Heizeinrichtungen zeigen eine Vielzahl von Dokumenten. Beispielsweise schlägt die DE 10 2011 120 306 A1 vor, einen Fahrradsattel beheizbar auszubilden, wobei die Heizung mit einer Batterie oder einem Akkumulator betrieben werden kann. Aus der DE 10 2010 014 230 A1 ist ein beheizbarer Fahrradsattel bekannt geworden, bei dem als Heizeinrichtung ein Draht in gespaltener Drahtanordnung vorgesehen ist. Diese Art der Drahtanordnung dient dazu, dass der aus der DE 10 2010 014 230 A1 bekannte Fahrradsattel sich an das Gesäß anschmiegen kann. Die DE 101 44607 A1 zeigt ein Fahrradsattel-Sitzbezug, der insbesondere im Winter auf Fahrradsättel montiert werden kann und eine mit einem Akkumulator versehenes Heizteil umfasst.

Die EP 3 222 502 A1 zeigt eine Sitzheizung mit Heizelementen, die in Hohlräume eingelassen sind und in jede Art von Fahrzeugen eingesetzt werden können. In der EP 3 222 502 A1 werden in diesem Zusammenhang insbesondere Zweiräder, bevorzugt Motorräder, genannt. Eine Sitzheizung für ein Motorrad ist auch aus der WO 2013/084 092 A1 bekannt geworden, wobei ein Heizelement in die Polsterung eines Sitzes eingebracht wird und von dem Polyurethan-Schaum, der das Polster ausbildet, umgeben wird. Auch der aus der WO 2013/084 092 A1 bekannte Sitz betrifft Sattel für Motorräder, wobei der in Form eines Drahtes vorliegende Heizwiderstand in die Sitzpolsterung, umgeben von Polyurethan-Schaum, eingebracht wird.

Aus der CN 203473097 U ist ein Sattel, insbesondere ein Sattel mit einer Heizeinrichtung, bekannt geworden, der an eine Speichereinrichtung angeschlossen ist.

Die CN 205769754 U zeigt einen elektrisch beheizten Fahrradsattel mit einer Regelung für eine konstante Heiztemperatur.

Aus der CN 202641925 U ist ein Fahrradsattel bekannt geworden mit einem hitzeisolierten Sitzkissen.

Auch die CN 206231486 U beschreibt einen Fahrradsattel mit einer Heiz- und einer Kühleinrichtung.

CN 205168708 U offenbart einen mit Batterie betreibbaren, heizbaren Fahrzeugsitz.

Der nächstliegende Stand der Technik in Form der EP 3025943 A1 zeigt ein Fahrrad mit einer Steuereinrichtung und einem Fahrradsattel, wobei die Temperatur des Fahrradsattels mittels eines Thermometers ermittelt wird.

Nachteilig an sämtlichen, beheizten Fahrradsatteln im Stand der Technik war, dass der Energieverbrauch sehr hoch gewesen ist, so dass eine dauerhafte Beheizung auf Grund fehlender Stromversorgungseinrichtungen mit ausreichender Stromversorgungskapazität nicht möglich war. Ein weiterer Nachteil der Fahrradsattel gemäß dem Stand der Technik war, dass Fahrradsattel mit einer elektrischen Heizeinrichtung und einer Einrichtung zur Stromversorgung der Heizeinrichtung des Weiteren keine Steuereinrichtung besaßen.

Aufgabe der Erfindung ist es somit, die Nachteile des Standes der Technik zu vermeiden. Diese Aufgabe wird durch einen Fahrradsattel gemäß Anspruch 1 gelöst. Beim erfindungsgemäßen Fahrradsattel ist die Stromversorgungseinrichtung in den Sattel integriert. Die Erfindung gibt somit einen Sattel an, der keinerlei aufwendige Verkabelung mit externen Stromversorgungseinrichtungen umfasst, wie es im Stand der Technik notwendig ist. Insbesondere ist vorgesehen, dass es sich bei der Stromversorgungseinrichtung in einer fortgebildeten

Ausführungsform um eine Lithium-Ionen-Hochleistungsbatterie handelt, die erfindungsgemäß in einem Schacht unterhalb einer Sitzfläche des Fahrradsattels, bevorzugt herausnehmbar, angeordnet ist. Bevorzugt handelt es sich bei der Lithium-Ionen-Hochleistungsbatterie beispielsweise um eine Batterie mit einer Spannung von 3,7 Volt und 2200 mAH Amperestundenleistung. Die Hochleistungsspeichereinrichtung ist bevorzugt aufladbar, beispielsweise mit Hilfe eines USB-Kabels. Bevorzugt liegt der Schacht zwischen zwei Dämpfungselementen, insbesondere Spiralfedern, mit denen die Sitzfläche des Fahrradsattels verbunden ist.

Erfindungsgemäß ist auch die Steuerelektronik für die elektrische Heizeinrichtung in den Fahrradsattel integriert.

Erfindungsgemäß ist vorgesehen, dass der Fahrradsattel einen Temperaturfühler zur Messung der Fahrradsatteltemperatur aufweist.

Mit Hilfe des Temperaturfühlers, der die Fahrradsatteltemperatur ermittelt, ist es möglich, dass die Steuereinrichtung die Heizeinrichtung nur so lange in Betrieb setzt, bis eine bestimmte Temperatur erreicht ist und die Heizeinrichtung bei Erreichen einer vorbestimmten Innen- und/oder Außentemperatur abgeschaltet wird, um Energie zu sparen. Die vorbestimmte Innen- und/oder Außentemperatur liegt im Bereich 40°C bis 50°C. Liegt die Temperatur höher, so kann es bei längerem Kontakt zu Verbrennungen kommen. Der beheizbare Fahrradsattel kann auch an eine externe Speichereinrichtung, beispielsweise die

Speichereinrichtung eines Elektro-Fahrrades, angeschlossen sein. In einer besonders bevorzugten Ausgestaltung ist es so, dass die Steuerelektronik des Fahrradsattels mit der Steuerelektronik der Speichereinrichtung des Elektro-Fahrrades kommuniziert. Beispielsweise kann vorgesehen sein, dass die externe Speichereinrichtung des Elektro-Fahrrades nur dann Energie zur Verfügung stellt, wenn das Elektro-Fahrrad nicht durch den Fahrbetrieb belastet ist, beispielsweise bei Bergabfahrt. Neben den unterschiedlichen Ausgestaltungen eines heizbaren Fahrradsattels sieht die Erfindung auch ein Fahrrad mit einem solchen Fahrradsattel vor.

Die Erfindung soll nachfolgend anhand der Figuren beispielhaft ohne Beschränkung hierauf beschrieben werden. Es zeigen:
- Figur 1a:: heizbarer Sattel von unten
- Figur 1b:: heizbarer Sattel von unten schräg
- Figur 1c;: heizbarer Sattel von hinten
- Figur 1d:: heizbarer Sattel von oben
- Figur 2:: Schnitt durch einen heizbaren Sattel
- Figur 3a:: heizbarer Sattel von hinten mit in einen Schacht eingesteckter Batterie
- Figur 3b:: heizbarer Sattel von hinten mit aus einem Schacht ausgebauter Batterie
- Figur 3c:: Aufnahme für die Batterien
- Figur 3d:: aus der Aufnahme genommene Batterie

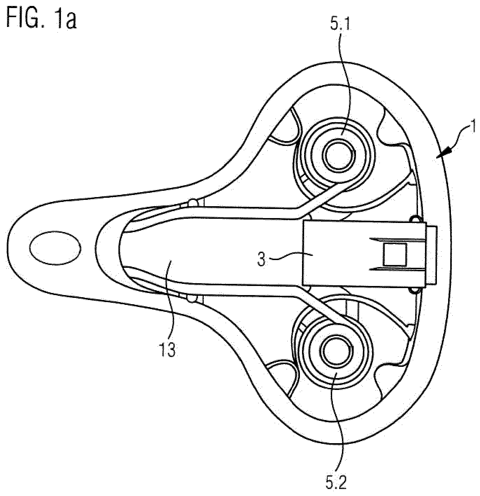

Figur 1a zeigt eine erste Ausgestaltung eines erfindungsgemäßen Sattels 1, bei dem die Einrichtung zur Stromversorgung 3 in Sattel 1 integriert ist. Bevorzugt ist die Einrichtung zur Stromversorgung zwischen zwei Spiralfedern 5.1, 5.2 angeordnet, die die Trägerplatte 13, auf die der Schaumstoff des Fahrradsattels aufgebracht ist, ergebend die Sitzfläche des Fahrradsattels (nicht gezeigt), federnd abstützen. Die Dämpfungselemente 5.1, 5.2 sind bevorzugt in Form von Spiralfedern ausgebildet. Wie aus Figur 1a deutlich zu ersehen ist, ist die Energieversorgungseinrichtung 3 in den Fahrradsattel integriert und bildet mit diesem ein Bauteil, so dass der Fahrradsattel mit der elektrischen Stromversorgungseinrichtung als Einzelbauteil kommissioniert und verkauft werden kann.

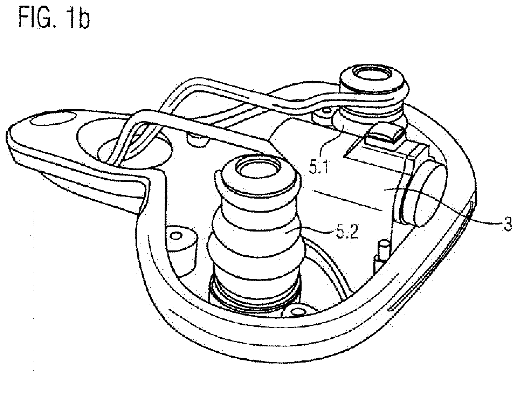

Noch besser zu sehen ist dies in Figur 1b. Figur 1b ist eine Ansicht eines erfindungsgemäßen Fahrradsattels mit integrierter Speichereinrichtung 3 von unten. Deutlich zu erkennen sind die Spiralfedern 5.1, 5.2, zwischen die die erfindungsgemäße Stromversorgungseinrichtung eingebracht ist.

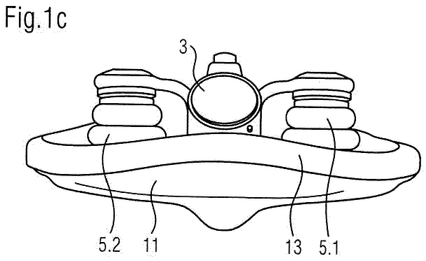

Die Rückansicht gemäß Figur 1c zeigt wiederrum die Stromversorgungseinrichtung 3 sowie die beiden Spiralfedern 5.1, 5.2. Deutlich zu erkennen ist in Figur 1c auch die Sitzfläche 11 des Fahrradsattels, die bevorzugt aus einem Schaumstoff, beispielsweise aus Polyurethan, ausgebildet ist und als Heizelemente beispielsweise Drähte oder auch Peltier-Elemente aufnimmt, sowie die Trägerplatte 13 aus einem Kunststoffmaterial, auf die der Schaumstoff, ergebend die Sitzfläche, aufgebracht ist und die federnd mit den beiden Spiralfedern 5.1, 5.2 verbunden ist.

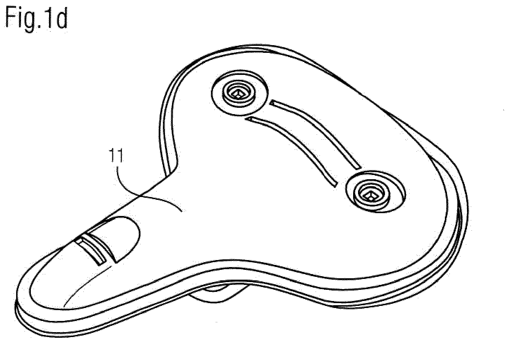

Eine Draufsicht auf den erfindungsgemäßen Fahrradsattel mit der Sitzfläche 11, in die beispielsweise die Heizdrähte für die elektrische Heizeinrichtung in Form einer Wiederstands-Heizung eingebracht sind, ist in Fig. 1d dargestellt.

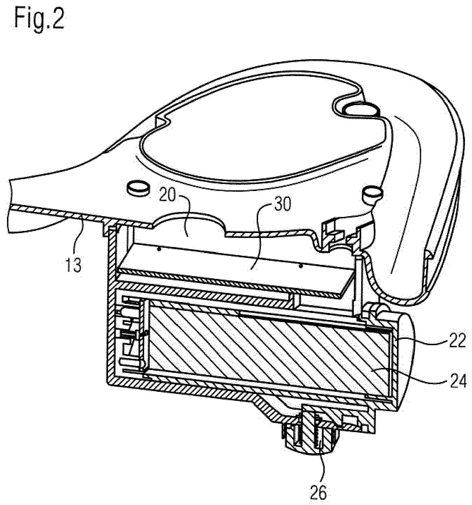

Figur 2 ist ein Schnitt durch einen erfindungsgemäßen Fahrradsattel. Gut zu erkennen ist zum einen die Trägerplatte 13, auf die das Sitzpolster, beispielsweise in Form von Polyurethan-Schaumstoff, aufgebracht wird. In die Trägerplatte 13 ist eine Öffnung 20 eingebracht. Durch die Öffnung 20 können die Kabel zur Stromversorgung der in der Kunststoffschicht liegenden Heizdrähte hindurchgeführt werden. Die Heizdrähte sind vorliegend nicht dargestellt. Gut zu erkennen ist das Batteriefach 22, in die die Hochleistungsspeichereinrichtung, insbesondere die Hochleistungsbatterie, bevorzugt ein Lithium-Ionen-Akku, zur Versorgung der Heizeinrichtung eingebracht werden kann. Die in den Schacht 22 eingebrachte Hochleistungsbatterie ist mit 24 gekennzeichnet und kann über Schalter 26 an- und ausgeschaltet werden. Wird die Hochleistungsbatterie 24 über den Schalter 26 angeschaltet, so heizt sie die in den Polyurethan-Schaumstoff liegenden Heizdrähte auf. Im Polyurethan-Schaumstoff ist ein Temperatursensor (nicht dargestellt) eingebracht, der die Temperatur im Schaumstoff misst. Überschreitet die Temperatur 40 bis 50°C, so greift eine Steuerelektronik in den Heizprozess ein und schaltet die Energiezufuhr durch die Stromzufuhreinrichtung ab. Die Steuerelektronik ist in Form eines integrierten Schaltkreises 30 ausgebildet, der wie dargestellt in den Sattel integriert und unterhalb der Trägerplatte 13 angeordnet ist.

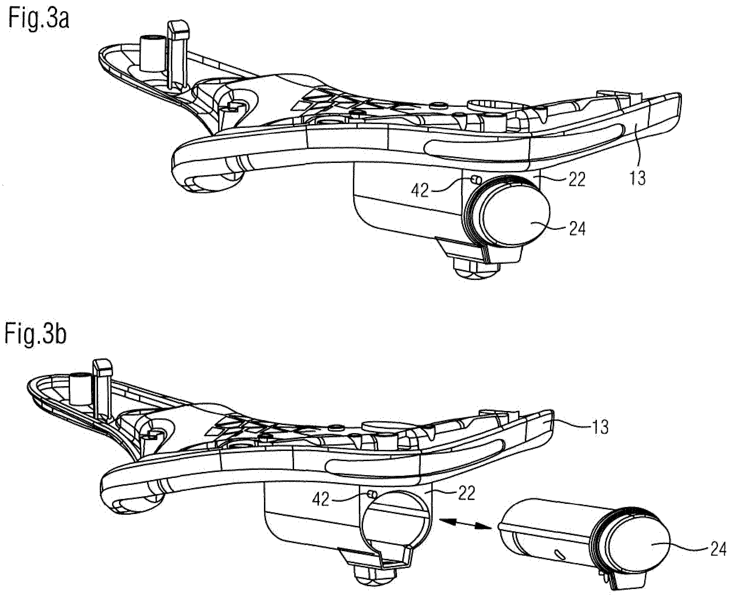

Figur 3a ist eine Ansicht der Trägerplatte 13 für den Polyurethan-Schaumstoff und die darin eingelegten Heizdrähten von hinten. Gut zu erkennen ist die Aufnahme 22 für die Batterie 24. Die Batterie 24 wird in die Aufnahme 22 eingeschoben und verriegelt.

Wird die Verriegelung über den Druckknopf 42 gelöst, so kann wie in Figur 3b gezeigt, die Batterie 24 aus der Aufnahme 22 entnommen werden. Gleiche Bauteile wie in Figur 3a sind mit denselben Bezugsziffern belegt.

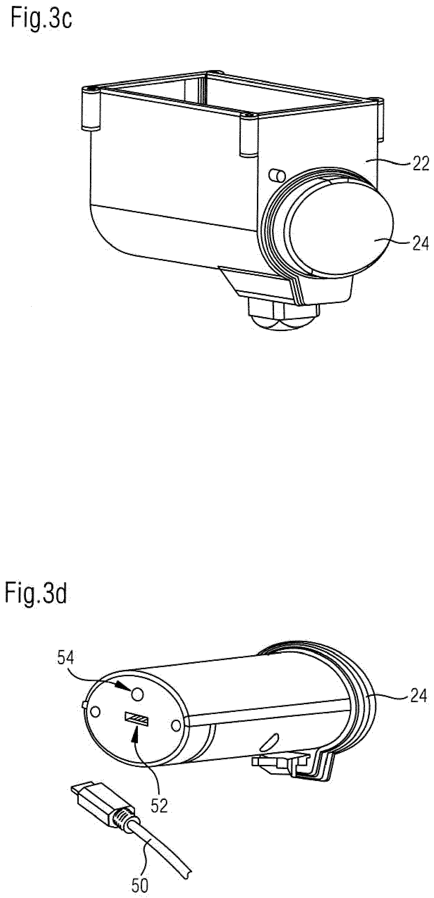

Figur 3c zeigt nochmals die Aufnahme 22 für die Batterie 24 im Detail und Figur 3d die Batterie 24 in herausgenommenem Zustand. Die Batterie 24 kann mit Hilfe eines USB-Kabels 50 durch Einstecken in den USB-Anschluss 52 aufgeladen werden. Den Ladezustand der Batterie zeigt das Licht 54.

Mit der Erfindung wird erstmals ein beheizbarer Fahrradsattel angegeben, der eine im Fahrradsattel integrierte Steuereinrichtung und Einrichtung zur Stromversorgung umfasst, sodass der Fahrradsattel selbst ein einzelhandelbares Gut ohne Kabelschlüsse für ein Fahrrad ist und der beheizbare Sattel alleine verkauft werden kann.

## Patentansprüche

1. Fahrradsattel (1) mit einer elektrischen Heizeinrichtung und einer Einrichtung zur Stromversorgung der elektrischen Heizeinrichtung, wobei die Einrichtung zur Stromversorgung (3) sowie eine Steuerelektronik (30) für die elektrische Heizeinrichtung in den Fahrradsattel integriert ist, wobei
der Fahrradsattel einen Temperaturfühler zur Messung der Fahrradsatteltemperatur umfasst,
**dadurch gekennzeichnet, dass**
die Steuerelektronik die Stromversorgung für die elektrische Heizeinrichtung (3) bei Erreichen einer vorbestimmten Innen- und/oder Außentemperatur abschaltet sowie die vorbestimmte Innen- und/oder Außentemperatur im Bereich 40°C bis 50°C liegt und die Einrichtung zur Stromversorgung in einem Schacht (22) unterhalb einer Sitzfläche des Fahrradsattels angeordnet ist.

2. Fahrradsattel nach Anspruch 1,
**dadurch gekennzeichnet, dass**
die Einrichtung zur Stromversorgung (3) eine Hochleistungsspeichereinrichtung umfasst.

3. Fahrradsattel nach Anspruch 2,
**dadurch gekennzeichnet, dass**
die Hochleistungsspeichereinrichtung eine Li-Ionen-Hochleistungsbatterie (24) ist.

4. Fahrradsattel nach einem der Ansprüche 1 bis 3,
**dadurch gekennzeichnet, dass**
die Einrichtung zur Stromversorgung unterhalb der Sitzfläche (11) auf einer Trägerplatte (13) des Fahrradsattels angeordnet ist.

5. Fahrradsattel nach Anspruch 4,
**dadurch gekennzeichnet, dass**
die Einrichtung zur Stromversorgung zwischen zwei Dämpfungselementen für die Sitzfläche angeordnet ist.

6. Fahrradsattel nach Anspruch 5,
**dadurch gekennzeichnet, dass**
die Dämpfungselemente Spiralfedern (5.1, 5.2) sind.

7. Fahrrad mit einem Fahrradsattel nach einem der Ansprüche 1 bis 6.

8. Fahrrad nach Anspruch 7, wobei das Fahrrad ein Elektro-Fahrrad ist,
**dadurch gekennzeichnet, dass**
der Fahrradsattel an eine externe Einrichtung zur Stromversorgung, insbesondere eine Speichereinrichtung des Elektro-Fahrrades, angeschlossen ist.

9. Fahrrad nach Anspruch 8,
**dadurch gekennzeichnet, dass**
die Steuerelektronik (30) des Fahrradsattels mit einer Steuerelektronik des Elektro-Fahrrades kommuniziert.

## Claims

1. Bicycle saddle (1) with an electric heating device and a device for supplying power to the electric heating device, wherein the power supply device (3) and control electronics (30) for the electric heating device are integrated into the bicycle saddle, wherein
the bicycle saddle comprises a temperature sensor for measuring the bicycle saddle temperature,
**characterized in that**
the control electronics switch off the power supply for the electric heating device (3) when a predetermined internal and/or external temperature is reached, and the predetermined internal and/or external temperature is in the range from 40°C to 50°C, and the device for the power supply is arranged in a shaft (22) beneath a seat surface of the bicycle saddle.

2. Bicycle saddle according to claim 1, **characterized in that** the power supply device (3) comprises a high-power storage device.

3. Bicycle saddle according to claim 2, **characterized in that** the high-power storage device is a Li-ion high-power battery (24).

4. Bicycle saddle according to one of claims 1 to 3, **characterized in that** the power supply device is arranged below the seat surface (11) on a support plate (13) of the bicycle saddle.

5. Bicycle saddle according to claim 4, **characterized in that** the power supply device is arranged between two damping elements for the seat surface.

6. Bicycle saddle according to claim 5, **characterized in that** the damping elements are spiral springs (5.1, 5.2).

7. Bicycle with a bicycle saddle according to one of claims 1 to 6.

8. Bicycle according to claim 7, wherein the bicycle is an electric bicycle, **characterized in that** the bicycle saddle is connected to an external device for power supply, in particular a storage device of the electric bicycle.

9. Bicycle according to claim 8, **characterized in that** the control electronics (30) of the bicycle saddle communicate with control electronics of the electric bicycle.

## Revendications

1. Selle de bicyclette (1) dotée d'un dispositif de chauffage électrique et d'un dispositif d'alimentation électrique du dispositif de chauffage électrique, le dispositif d'alimentation électrique (3) ainsi qu'un système électronique de commande (30) du dispositif de chauffage électrique étant intégrés à la selle de bicyclette,
la selle de bicyclette comprenant une sonde de température pour mesurer la température de la selle de bicyclette,
**caractérisée en ce que**
le système électronique de commande désactive l'alimentation électrique du dispositif de chauffage électrique (3) lorsqu'une température intérieure et / ou extérieure prédéfinie est atteinte ainsi que la température intérieure et / ou extérieure prédéfinie se trouve dans la plage entre 40 °C et 50 °C et que le dispositif d'alimentation électrique est disposé dans un puits (22) au-dessous d'une surface d'assise de la selle de bicyclette.

2. Selle de bicyclette selon la revendication 1,
**caractérisée en ce que**
le dispositif d'alimentation électrique (3) comprend un dispositif de stockage hautes performances.

3. Selle de bicyclette selon la revendication 2,
**caractérisée en ce que**
le dispositif de stockage hautes performances est une batterie hautes performances lithium-ion (24).

4. Selle de bicyclette selon l'une des revendications 1 à 3,
**caractérisée en ce que**
le dispositif d'alimentation électrique est disposé au-dessous de la surface d'assise (11) sur une plaque de support (13) de la selle de bicyclette.

5. Selle de bicyclette selon la revendication 4,
**caractérisée en ce que**
le dispositif d'alimentation électrique est disposé entre deux éléments d'amortissement pour la surface d'assise.

6. Selle de bicyclette selon la revendication 5,
**caractérisée en ce que**
les éléments d'amortissement sont des ressorts hélicoïdaux (5.1, 5.2).

7. Bicyclette dotée d'une selle de bicyclette selon l'une des revendications 1 à 6.

8. Bicyclette selon la revendication 7, la bicyclette étant une bicyclette électrique,
**caractérisée en ce que**
la selle de bicyclette est connectée à un dispositif externe d'alimentation électrique, en particulier à un dispositif de stockage de la bicyclette électrique.

9. Bicyclette selon la revendication 8,
**caractérisée en ce que**
le système électronique de commande (30) de la selle de bicyclette communique avec un système électronique de commande de la bicyclette électrique.
